# EUROPEAN PATENT APPLICATION

(11) **EP 2 660 772 A1**
(43) Date of publication of application: **06.11.2013**
(21) Application number: 13165740.5
(22) Date of filing: 29.04.2013
(51) Int. Cl.: G06Q 50/20

(54) **Method of sharing knowledge and information between learning communities**

(30) Priority: 30.04.2012 KR 20120045687
(71) Applicant: Cho, Hyun Gu, Seoul 152-050 (KR)
(72) Inventor: Cho, Hyun Gu, Seoul 152-050 (KR)
(74) Representative: von Kreisler Selting Werner

(57) **Abstract**

A method of providing an educational social networking service (SNS) which can combine students, teachers and parents together while serving as an auxiliary tool for educational activities which are carried out in actual classes. The educational SNS provides a user interface (UI) page that is suitable to the characteristics of the age group of users, provides a space in which entire generations can communicate with each other by accommodating a variety of generations including students, teachers and parents, and provides a learning management system (LMS) system, or an auxiliary tool for education. In this fashion, Classting, or a powerful tool capable of combining worldwide education, can establish a global social network and support cooperative learning based thereon.

## Description

### CROSS REFERENCE TO RELATED APPLICATION

The present application claims priority from Korean Patent Application Number 10-2012-0045687 filed on 30/04/ 2012, the entire contents of which application are incorporated herein for all purposes by this reference.

### BACKGROUND OF THE INVENTION

### Field of the Invention

The present invention relates to a method of sharing knowledge and information between learning communities, and more particularly, to a method of sharing knowledge and information between learning communities, which is provided with Classting (a compound word of "class" and "meeting") which is a powerful tool capable of combining worldwide education. Classting can combine social networking service (SNS) tools for the sharing of information with learning management tools, accommodate student, teacher and parent groups together, and establish a global social network, thereby supporting cooperative learning.

### Description of Related Art

Recently, smart devices such as smartphones and tablet personal computers (PC) are commercially distributed and societies and companies are establishing a new paradigm using Web2.0 tools. Also, in education, it has been proven by scholars that a social networking service (SNS) using the Web2.0 shows an educational effect in a variety of fields, such as cooperative learning, school activities and the sharing of information. However, typical Web2.0 tools which are currently serviced, such as Facebook, Twitter, Blog and Flickr, are not focused on education, and are more or less unsuitable to be utilized for classes and the management of a classroom. Although educators have been recently making attempts to develop educational Web2.0 tools focused on education by studying the characteristics of the Web2.0, there are no educational Web2.0 tools in which an SNS is combined with a learning management system (LMS).

Referring to a related art which is well-known in the art to which the present invention pertains, Korean Patent No. 10-0732880 (titled *"FOREIGN LANGUAGE LEARNING SYSTEM AND METHOD BASED ON NETWORK",* registered June 21, 2007) is disclosed. This approach is based on a network and involves a student terminal, a teacher terminal and a large understanding display terminal, which are classified depending on the level of the learning of each student. A level class is formed based on the level of the learning of the student. In the level class, lesson data, test data about the understanding of a lesson, and test analysis result data are provided to each terminal. An authentication on access to a lecture is carried out from the student terminal and the teacher terminal in the corresponding level class. Lesson data and test data corresponding to the lesson data of authenticated students are provided. Test results are analyzed in real time and are provided to the large understanding display terminal of the level class so that the display terminal displays the test results. The test results are applied to a learning level database depending on the student, and are applied in adjusting the learning level of the student, providing a customized vocabulary, and reporting of the understanding of the lesson. A situation at each point where a plurality of the level classes is formed is analyzed in order to determine any content that is insufficient in the use of the learning system. The determined content is supported via a related organization.

The information disclosed in the Background of the Invention section is only for better understanding of the background of the invention, and should not be taken as an acknowledgment or any form of suggestion that this information forms a prior art that would already be known to a person skilled in the art.

### BRIEF SUMMARY OF THE INVENTION

The present invention has been devised in order to overcome the foregoing problems with the related art, and an object of the present invention is to provide an educational social networking service (SNS) which can combine students, teachers and parents together while serving as an auxiliary tool for educational activities which are carried out in actual classes by providing a user interface (UI) page that is suitable to the characteristics of the age group of users, providing a space in which entire generations can communicate with each other by accommodating a variety of generations including students, teachers and parents, and at the same time, providing a learning management system (LMS) system, or an auxiliary tool for education. In this fashion, the present invention provides Classting, or a powerful tool capable of combining worldwide education, which can establish a global social network and support cooperative learning based thereon.

In an aspect of the present invention, provided is a method of sharing knowledge and information in a learning community, the sharing method being realized using a network which serves as a passage, through which voices and data are transmitted and received, and is implemented as a wired network and a wireless network, and a web server, a teacher terminal, a student terminal and a parent terminal which are connected to the network. The sharing method includes the following steps of: by the web server, registering a student to Classting by receiving registration information from the student; creating a home for the student whose registration information is inputted into a cyberspace of the web server; automatically searching for a class that corresponds to information on a school and a year of birth that are inputted when registering the student, assigning the student to the corresponding class if the class is present, and creating the corresponding class if the class is not present; recommending another student as a friend based on the registration information that is inputted when registering the student, and allowing the student to invite another student as a friend; registering knowledge or information in the class so that viewing of knowledge is set to be either free or paid, open only to friends, or open to a person who is not a class member; if the registered knowledge is set to be free, allowing another student to share and view the registered knowledge when another student accesses the registered knowledge, and if the registered knowledge is set to be paid, preceding online payment when another student attempts to access the knowledge set to be paid, and providing the registered knowledge when the payment is completed so that the knowledge is viewed; searching for another class based on a subject or a keyword; and recommending a class, of which an age and/or a keyword are similar to those of the student.

According to an exemplary embodiment of the present invention, the step of recommending the class includes the steps of: recognizing the information on the year of birth which is inputted during the registration; setting a class age to a year of birth to which a greatest number of members in a class has; generating recommendation information for recommending another class having the same age; receiving and setting a subject and a search keyword of the corresponding class; and generating recommendation information for recommending another class, of which a subject and/or a search keyword are similar to the subject and search keyword that are set.

According to an exemplary embodiment of the invention, the sharing method may further include providing a customized interface and a user interface. The customized interface is set to the age of the student based on the registration information. The user interface includes an individual page and a class page. The individual page provides an SNS consisting of, for example, photo album, image room, portfolio, lecture room and library functions. The class page provides an LMS consisting of, for example, announcement, discussion chat, cooperative learning, homework room, private counseling, survey, photo album, image room, classroom library and teacher's room functions.

According to an embodiment of the invention, the class page may provide a Classting service including the steps of: searching for a class that a user wants to communicate using a Classting menu provided in the class menu; applying for Classting by selecting the class that the user wants from searched results; and notifying a teacher in charge of the selected class that the selected class is applied for Classting, and obtaining approval from the teacher in charge. After the application for Classting is approved, members of the classes which communicate with each other via Classting can review comments exchanged between the members of the classes and activity update records, the members including students, parents and teachers. The class page may further include a service in which the learning management service and the social networking service are combined by sharing cooperative learning, a survey, a discussion chat and a photo album from among tools provided by the class page.

According to an embodiment of the invention, the class page may further provide a survey service including the steps of: setting targets of the survey, and providing a survey setting menu that pops up so that a class member can make up the survey; receiving answers to questions of the survey from the targets of the survey; reviewing, by a survey writer and the targets, results obtained from an analysis for the entire survey and an analysis for each question; and when it is wanted, at the process of reviewing the results, to carry out additional survey in the class which communicates via Classting with the class which was set as the targets of the survey when the survey was made up, carrying out an additional survey using a "Send to another class" function.

According to embodiments of the present invention, the user specific SNS-combined learning community service performs an auxiliary function for educational activities in actual classes, provides a communication space for students, teachers and parents, and supports global educational communication beyond the geographical limits.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1A is a view showing an access screen and a register menu in a user specific SNS-combined learning community service according to the present invention;

FIG. 1B is a view showing a screen according to the present invention, with which information about a user is inputted after registration;

FIG. 1C is a view showing a screen having an automatic class recommendation and class search window based on information about a member according to the invention;

FIG. 1D is a view showing a screen of a class page according to the invention, which is displayed when a class which a user wants to join is selected from a list as the result of searching for classes;

FIG. 1E and FIG. 1F are views each showing a class application screen according to the invention, which appears upon selection of the role of a student and the role of a parent when a join button is pressed in each class page;

FIG. 1G is a block diagram showing the configuration of a system according to the invention;

FIG. 1H is a flowchart showing the major steps of a method according to the invention;

FIG. 1I is a flowchart specifying the recommendation step according to the invention;

FIG. 2 is a view showing a main page screen of a class which a user joined according to the invention;

FIG. 3A is a view showing a Classting management screen according to the invention, with which Classting between classes are applied, approved and canceled;

FIG. 3B is a view showing a class search screen according to the invention, with which a user can search for a class which he/she wants to join via Classting;

FIG. 4 is a view showing a cooperative learning service screen according to the invention;

FIG. 5A is a view showing an announcement service screen according to the invention;

FIG. 5B is a view showing an SMS screen of a smartphone which announces a notice according to the invention;

FIG. 5C and FIG. 5D are views each showing a class schedule page in which a class schedule is added according to the invention, the class schedule page in FIG. 5C having the shape of a list, and the class schedule page in FIG. 5D having the shape of a calendar;

FIG. 6 is a view showing a homework room service screen according to the invention;

FIG. 7 is a view showing a portfolio service screen according to the invention;

FIG. 8A is a view showing a mentoring service management tool screen according to the invention;

FIG. 8B is a view showing a mentoring service write/ read screen according to the invention, in a mentoring comment can be written on and read from the screen;

FIG. 9 is a view showing the basic concept of the SNS-combined learning community service according to the invention; and

FIG. 10 is a view showing a customized interface dedicated to young kids according to an embodiment of the invention.

### DETAILED DESCRIPTION OF THE INVENTION

In order to describe the present invention in detail in conjunction with the accompanying drawings, reference will now be made to a schematic system configuration and the major flows, based on which a detailed screen configuration will be illustrated.

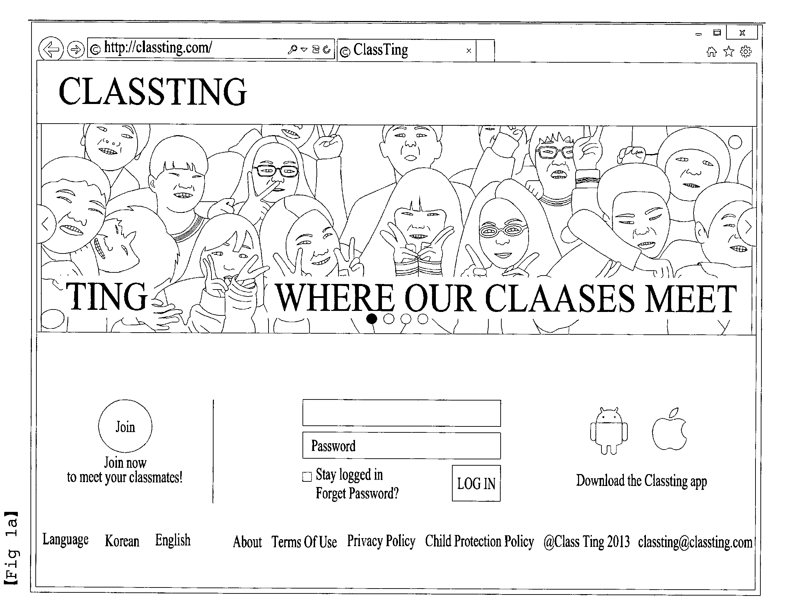

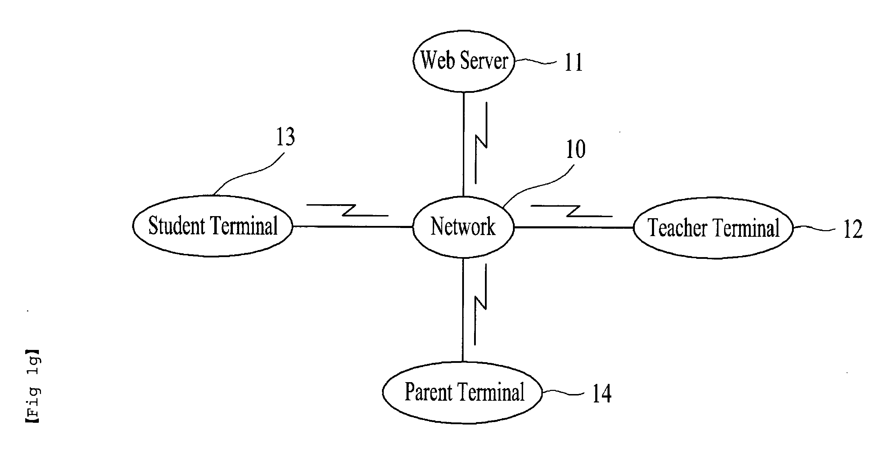

Referring to FIG. 1G, a network 10 serving as a passage, through which voices and data are transmitted and received, is implemented as a wired network and a wireless network. A web server 11, a teacher terminal 12 and a student terminal 13 are also interconnected by wire or wireless means. Each of the web server 11 and the terminals 12 and 13 can be implemented as any one selected from among a desktop personal computer (PC), a notebook computer, a laptop and a portable computer (including a pad-type computer), irrespective of whether it is Macintosh or IBM compatible, and a smartphone. This system configuration forms components for realizing the present invention, even though it is not a key factor of the present invention.

In the specification of the present invention, for convenience's sake of explanation, a description of the network 10 will be omitted since a network is a well-known technology. The teacher terminal 12 will be shortly referred to as "teacher," the student terminal will be shortly referred to as "student," and the parent terminal 14 will be shortly referred to as "parent." Although a class unit community (class) and Classting realized on the web server correspond to cyberspaces realized on the web server, they will be shortly referred to as "class" and "Classting." Any hardware configuration thereof will not be described further.

Description will be given of the major flows for the class and Classting.

For reference, the class indicates a class community established in a cyberspace of the web server, where Classting indicates a "website name" as well as a "meeting between class members."

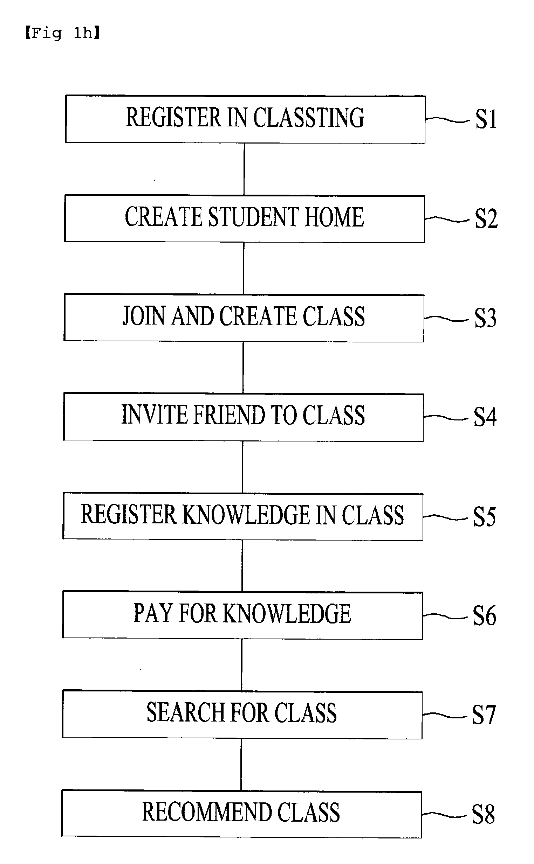

Referring to FIG. 1H, the process sequentially carries out a first step S1 of registering a student in Classting by receiving registration information from the student, a second step S2 of creating a home for the student whose registration information is inputted, and a third step S3 of automatically searching for a class that corresponds to information on a school and the year of birth that are inputted at registration, assigning the student to a corresponding class if the class is present, and creating the corresponding class if the class is not present.

The process sequentially carries out a fourth step S4 of recommending another student as a friend based on the registration information that is inputted at the first step S1, and allowing the student to invite another student as a friend, and a fifth step S5 of registering knowledge or information in the class.

At the fifth step S5, it is possible to set the viewing of knowledge to be either free or paid for, set the viewing of knowledge to be open only to friends, and set the viewing of knowledge to be open to a person who is not a class member.

The process sequentially carries out a sixth step S6 of preceding online payments when another person attempts to access the knowledge that is set to be paid for, and providing the registered knowledge when the payment is completed so that the knowledge is viewed, a seventh step S7 of searching for another class based on a subject or a keyword, and an eighth step S8 of recommending a class, of which the age and/or keyword are similar to those of the student.

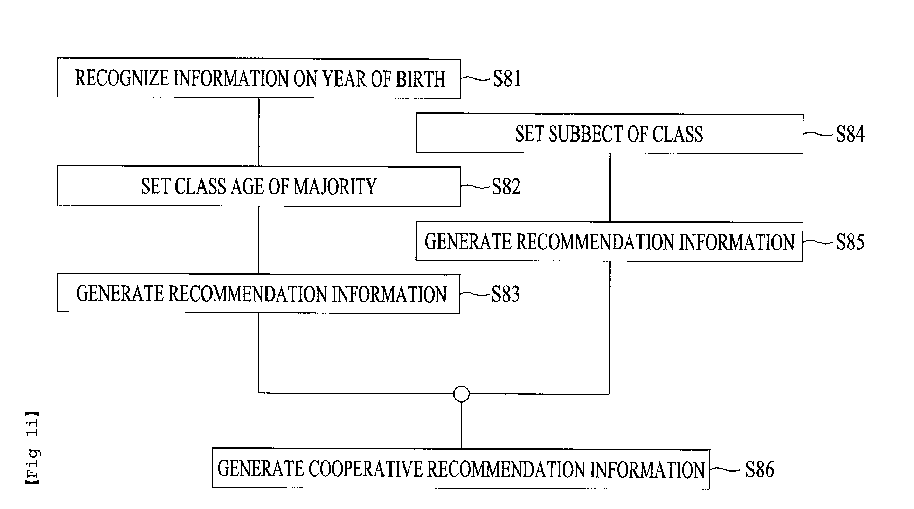

Referring to FIG. 1I, the process sequentially carries out a first step S81 of recognizing the information on the year of birth which is inputted during the registration, a second step S82 of setting a class age to a year of birth to which the greatest number of members in a class has, a third step S83 of generating information for the recommendation of another class having the same class age, a fourth step S84 of receiving and setting a subject and a search keyword of the corresponding class, and a fifth step S85 of generating information for the recommendation of another class, of which the subject and/or search keyword are similar to the subject and search keyword that are set.

The process carries out a sixth step S86 of generating cooperative recommendation information by combining the recommendation information based on the age generated at the third step S83 and the recommendation information based on the keyword generated at the fifth step S85. At this time, since the subscriber is a student, it is preferred that the recommendation information of the third step S83 be selected with the highest priority and another class which is searched for by selecting the recommendation information of the sixth step S86. However, this can be modified as required.

Based on the system and data flows as described above, a detailed screen configuration will be illustrated as follows.

### Basic Concept of an SNS-Combined Learning Community Service

The SNS-combined learning community service supports community activities in a class unit as well as existing SNS, and is provided to be interlocked with a bulletin board and a chatting program. A class unit community (hereinafter, referred to as "class") is a prominent characteristic of this service. When the class is established, a unit code is given. A student or a parent can join the corresponding class by inputting the unit code. The class can be searched for based on the title of the class or the name of a teacher, and the user can join the class when approved. In the class created in this fashion, it is possible to use a variety of functions, such as announcements, cooperative learning, discussion chat, performance assessment, private counseling, a survey service and so on. Since the service can be carried out using a mobile device, it acts as an available auxiliary tool for the management of a class in the smart learning age.

While the existing SNS provides a service limited to communication between persons, the service according to the invention provides an effective educational service for communication between classes. This service also provides a space, in which students, parents and teachers who belong to a plurality of classes in a variety of domestic or abroad regions can communicate with each other. Students in different classes carry out cooperative learning based on a common subject. In this fashion, a variety of attempts can be made using a global social network established via Classting. In addition, students in different classes who became friendly with each other through communication can increase their private social network using a mentoring service provided by the method of the present invention.

### Mentoring

This service supports individual communication, and helps a user find people who the user wants to communicate with in order to construct a person-to-person social network, which is referred to as a mentor/mentee relationship.

The mentor/mentee relationship is set between users who want to communicate, and postings which are edited by mentor/mentee counterparts are updated in real time and are automatically displayed on individual pages of the users. Also provided are management tools with which a user can individually keep postings, set postings only what he/she wants to be open, or set subjects to which postings are to be sent. In addition, the mentor and the mentee can exchange a note or have a chat.

### Photo Album

Photographs can be registered in the photo album. Photographs can be managed according to folders, and be set to be either open or not according to folders in order to protect privacy.

### Image Room

Images can be registered, be embedded in link addresses, and be managed according to folders. Since images can be set to be either open or not according to folders in order to protect privacy.

### Portfolio

The portfolio provides records of learning activities of a user by editing them. When a report submitted in a class to which the user belongs is registered in a class page, the report is promptly recorded as a learning activity in the portfolio service, interlinked with an individual page. A list of records of learning activities, which were carried out not only in classes to which the user currently belongs but also in classes to which the user belonged in the past, is displayed in time sequence, so that the user can refer to, correct or download all of his/her learning activities.

### Lecture Room

Lectures can be purchased or subscribed from a variety of Internet lecture sites using the account of this service.

### Bookstore

Electronic books (e-books) can be purchased or subscribed from a variety of Internet lecture sites using the account of this service.

### Announcement

When a teacher writes a notice that he/she wants to send to students, the notice is automatically stored by a date. An indication function sends an announcement to a smart device, SMS account or mail of students or parents.

In addition, it is possible to make up a class schedule, and input and announce information regarding school and class activities, such as an examination period or the payment of the charge for a school meal. Activities that are inputted are announced one day earlier via the smart device, SMS account or mail of students or parents.

Using this function, the teacher can easily and rapidly notify students and parents of the information as required.

### Discussion Chat

A discussion chat service is provided using a web messenger in order to carry out an effective discussion. Students who joined a class can participate in a group chat. Unlike a typical chat, a box into which the topic of a discussion can be inputted is created at the side of a chat window. A host who opened a chat room can input the topic of the discussion into that box. When the chat is carried out, if anyone who can participate in the chat clicks the topic of the discussion, he/she enters the chat room.

Therefore, while the chat is being properly carried out, contents necessary for the discussion are separately described in a discussion window, so that the discussion can be more effectively carried out in a chat situation.

### Cooperative Learning

A document tool and a discussion chat service are provided. This service allows a group of members who belong to the same class and/or registered in Classting to cooperatively learn. When the leader of the group opens a group meeting, and the other members of the group join the meeting when approved. The members of the group can execute a project set to their group in one document.

In this fashion, elementary, middle and high school students can carry out cooperative learning or a long-term cooperative project after school.

### Homework Room

A teacher makes up occasional assignment folders according to the lesson and subject, and guides the assignment folders to students. When making up a folder, the teacher can determine whether the folder is for a simple assignment or for an assignment to be evaluated. If the assignment is to be evaluated, the teacher determines the number of levels (5 or 4 levels) at which reports will be evaluated or whether reports will be descriptively evaluated. The teacher also determines an evaluation method on whether the reports will be evaluated by the teacher or peer students (peer assessment), and the range in which the results of evaluation can be viewed differs depending on the evaluation method. In the case of peer assessment, all of class members (parents, students and the teacher) can review the results of evaluation. If the assignment is evaluated by the teacher, the result of evaluation of each student can be viewed only by a corresponding student, his/her parents and the teacher. Students can upload their reports of the assignment, and the teacher can review the uploaded reports and directly evaluate the reports in that page. The records that are evaluated in this fashion can be displayed in one page of a performance assessment corner of a teacher's room so that they can be viewed at a glance.

In this fashion, frequent assessment, the importance of which has been recently emphasized, can be more efficiently managed.

### Private counseling

A private counseling bulletin for students and parents is provided. When a student or parent who seeks advice writes about an issue, it is notified to a teacher. When the teacher writes a reply to the issue, the reply is notified to the student or parent.

This can make the student or parent feel less intimidated than in actual face-to-face counseling, thereby reducing the occurrence of problems in class.

### Survey

A survey and analysis service is provided for a class or classes which communicate with each other via Classting. This helps teachers or students easily make up a survey, and once the survey is carried out, provides a survey creator with an analysis for each question and an analysis for the entire survey. In addition, an additional survey can be carried out using a "Send to another class" function. This can lessen the load of teachers who have difficulties in distributing and collecting survey sheets and obtaining the statistics of the survey.

### Photo Album

Class photographs can be registered in a class page, and be managed according to folders. Photographs can be set to be either open or not according to folders, and desirable photographs can be scrapped so that they can be displayed on photo albums of individual pages. Photographs can be uploaded and downloaded individually or in a folder so that group photographs of a class can be easily uploaded and downloaded.

In this fashion, memories of that class can be carried after the year has passed.

### Image Room

It is possible to register images that can be displayed to teachers, students and parents who joined the class. The images can be embedded to a link address, and be managed according to folders. The images can be set to be either open or not according to folders, and desirable images can be scrapped so that they can be displayed on image rooms of individual pages.

### Classroom library

This is an electronic classroom library which teachers, students and parents who joined the class can use. E-books can be purchased from a variety of e-book stores, and class members can borrow e-books from the classroom library.

### Teacher's room

Student/parent management, performance assessment and teacher community services are provided. In the student/parent management, students are arranged in numerical order, and parents are linked to their children, such that major information about the students can be conceived at a glance. In the performance assessment, the results of the performance assessment on the reports submitted by students can be displayed in one page. It is also possible to review the accumulated results of evaluation for each student. The teacher community service allows a teacher to select and join some teacher communities depending on the grade or lesson and share a variety of educational materials and various pieces of information in the teacher communities.

Accordingly, teachers can more efficiently carry out the student/parent management, more efficiently manage the results of the performance assessment, the importance of which is further increased currently, and share worldwide educational information through the teacher communities.

### Classting

Classting is a service with which a member or a class can communicate with classes in a variety of domestic or abroad regions. Classting helps classes communicate with each other by randomly recommending classes having the same grade in different regions. It is also possible to meet other classes by searching for them. In an example, when a first class wants to communicate with a second class via Classting, a teacher in charge of the first class applies for Classting. When the application is approved by a teacher in charge of the counterpart second class, Classting is established between the two classes.

Members of the classes which established Classting therebetween can input comments in the main page of their counterpart classes. Due to Classting, it is also possible to carry out cooperative learning and a discussion chat between the two classes.

Accordingly, this service encourages students who are rather passive or lack opportunities to establish a global social network, and gives them opportunities to combine worldwide education.

FIG. 1A shows an access screen of a knowledge and information sharing service according to the present invention, which has a registration menu in the left side, and in which a user can register in this service by inputting membership information into the menu on the access screen.

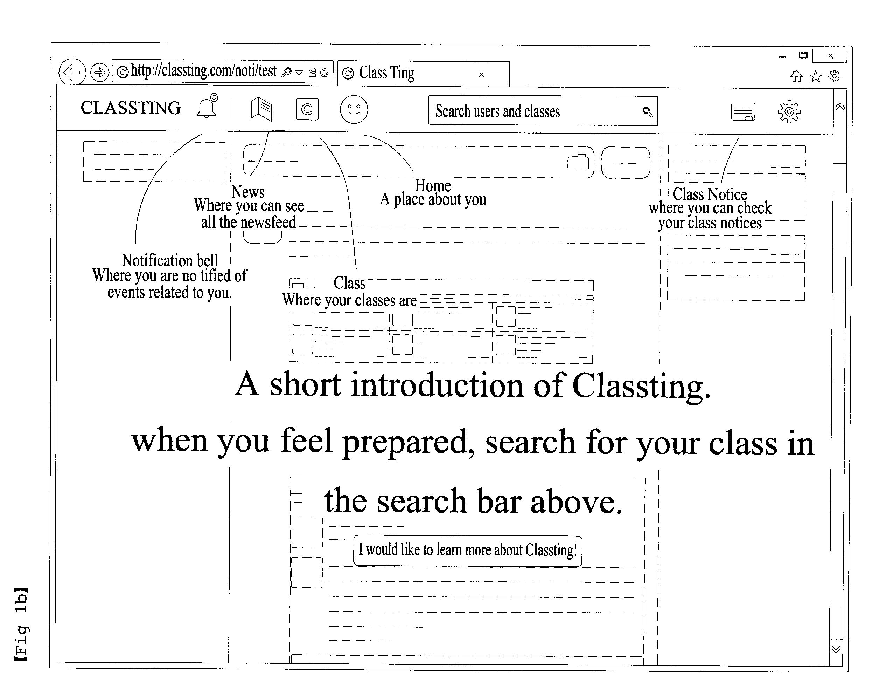

FIG. 1B shows a screen after registration in the service according to the present invention, i.e. the step of inputting information based on which a friend and class relating to a user are to be automatically recommended.

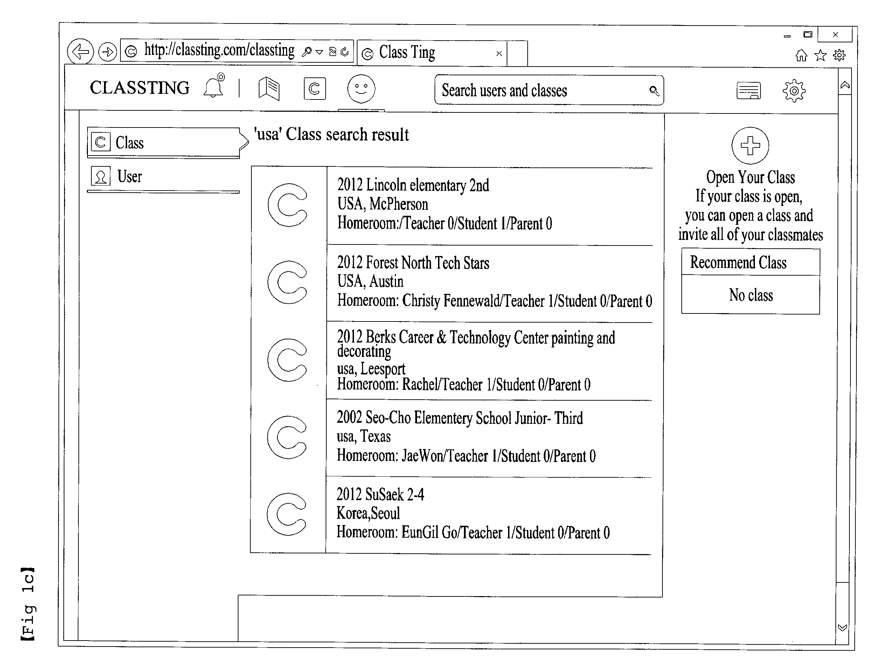

FIG. 1C shows a screen having a class search window in the service according to the present invention, in which a related class is recommended based on basic information which is input after registration.

When the name of a class, the name of a teacher or the unique number of the class is input into the class search window in order to find the class which a user wants to join rather than the recommended class, related classes are searched for and are then displayed in a list.

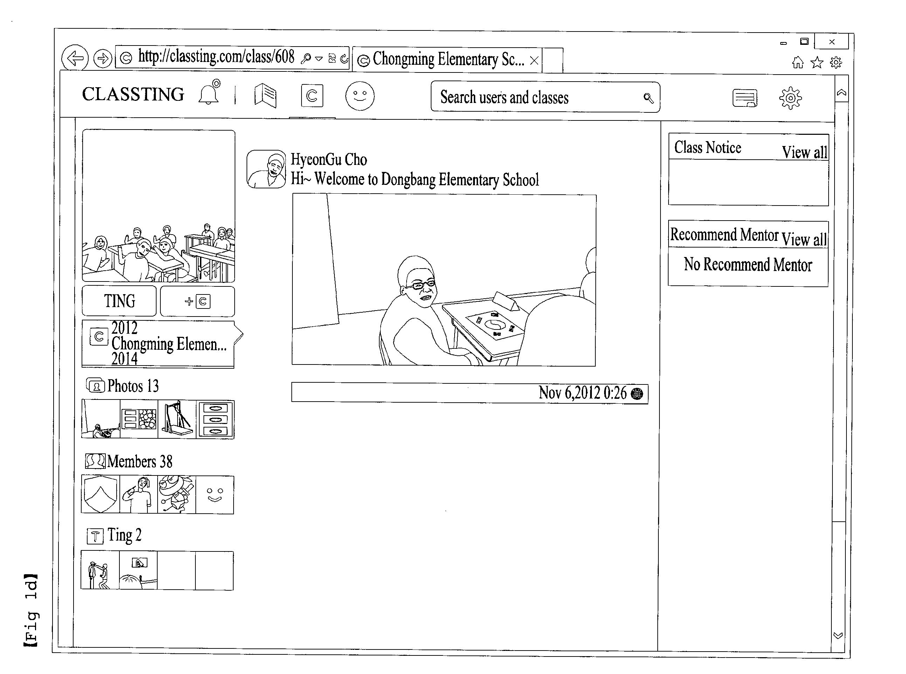

The user can move to a corresponding class page shown in FIG. 1D by clicking the class which he/she wants to join in the searched list.

When the user moved to the corresponding class page shown in FIG. 1D, a "Join" button is provided in the central portion of the left frame. Members of the corresponding class and another class which the user joined via Classting are displayed in the shape of a thumb mail in the bottom of the left frame, and the detailed profile of the corresponding class is shown in the central frame.

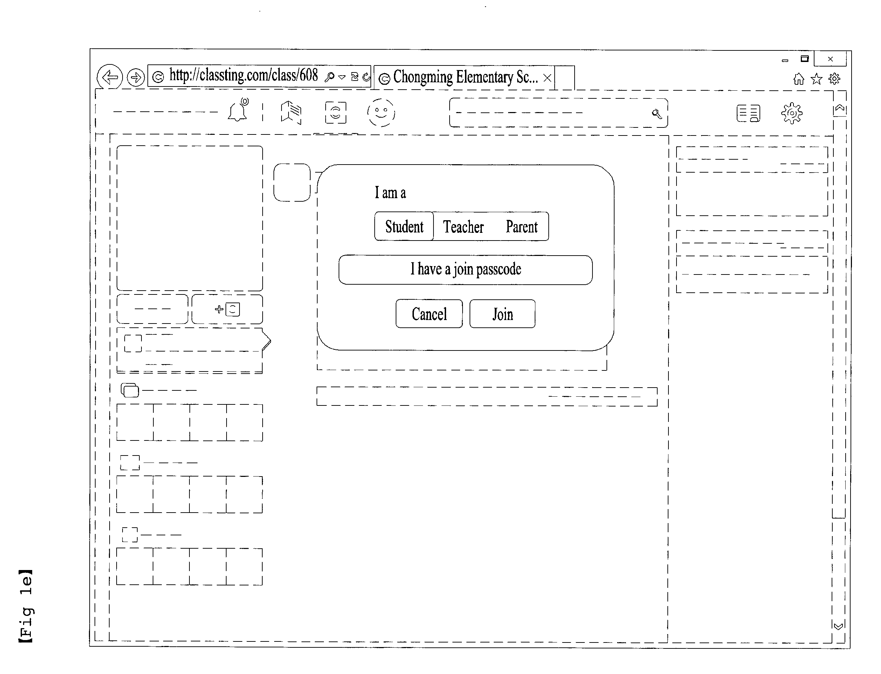

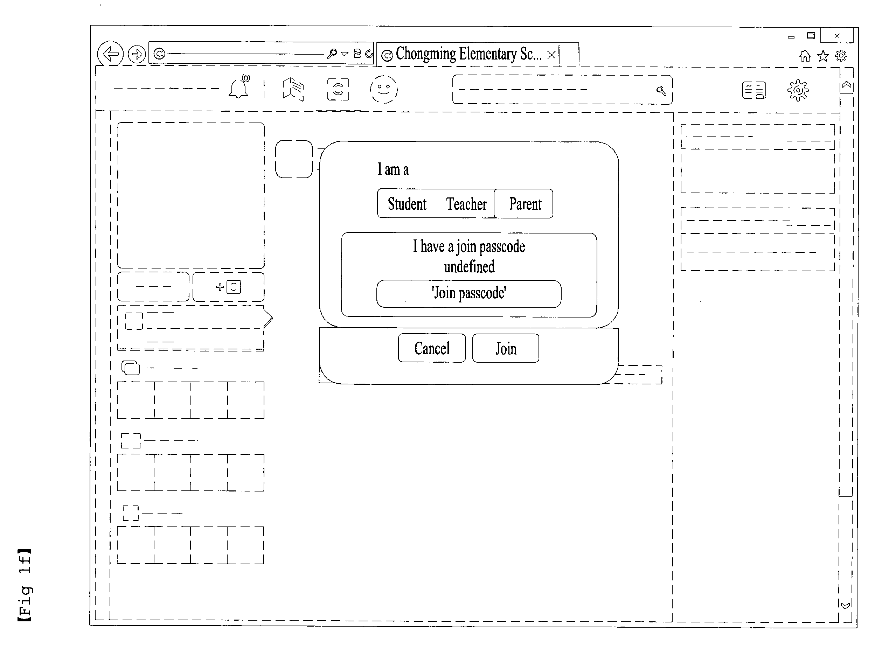

FIG. 1E and FIG. 1F show pop-up application screens each of which appears when the "Join" button is pressed in the corresponding class page. If the user knows the unique number that is set at the opening of the class, the user can directly register by inputting the number. When a "Join" button for application in FIG. 1E or FIG. 1F is pressed without inputting the unique number, the user can join when he/she is approved by the host of the class. When the "Join" button for application is pressed, the host is notified of the application via various types of smart devices, an e-mail, and/or the web page of this service. When a parent selects the class, an input window appears so that the name of a child can also be inputted. The application of registration is completed when the name of the child is inputted.

When a parent is initially approved to join the class, the child is registered at that time and is automatically recognized. When the child joins another class later, the parent is notified to join this class via various types of smart devices, an e-mail, and/or the web page of this service.

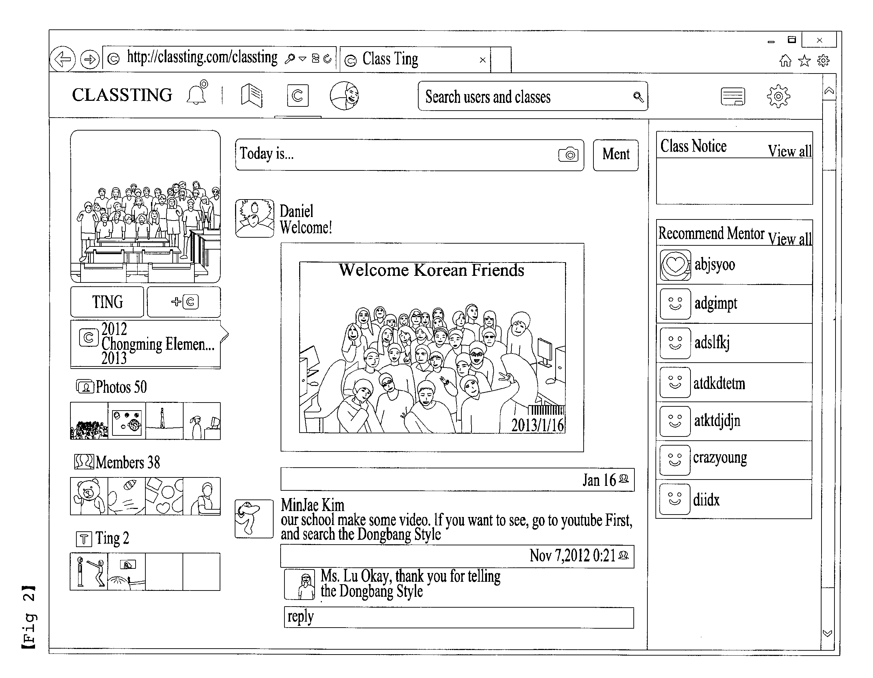

FIG. 2 shows a main page screen of a class which a user joined, in which a window into which a comment can be inputted is provided in the central frame, and comments inputted by members of the class are updated and provided in real time.

A learning management system (LMS), an auxiliary tool for education, is provided in the center of the left frame of the class page. In this service, detailed services, such as an announcement, a discussion chat, cooperative learning, a homework room, secrete counseling, a survey, a photo album, an image room, a classroom library and a teacher's room, are provided. The teacher's room forms a teacher dedicated service, which is provided exclusively to teachers.

In the bottom of the left frame of the class page, members of the class and another class which the user joined via Classting are displayed in the shape of a thumb nail. When a thumb nail is clicked, the service moves to individual pages of the members and the pages of the classes.

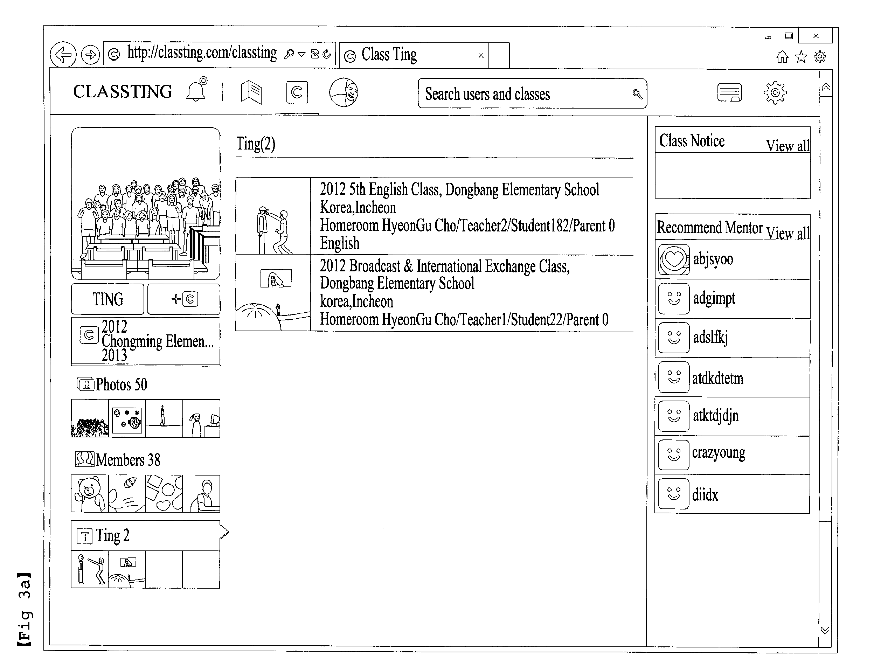

When the Classting item is clicked, the services moves to a Classting page shown in FIG. 3A, in which it is possible to search for and manage a class which the user wants to communicate with.

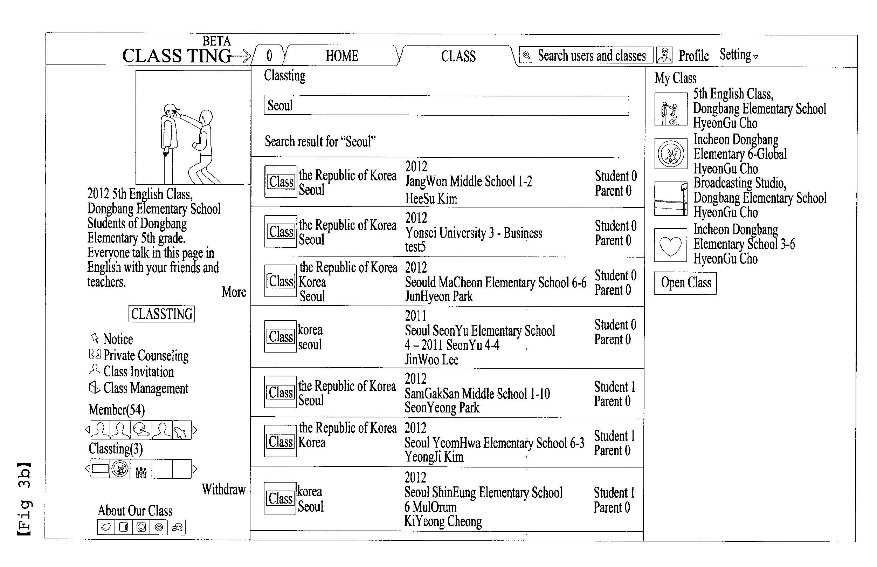

FIG. 3B is a screen which is shown when the Classting item is clicked, in which it is possible to continuously review a list while scrolling down. When a keyword, such as a region or a subject, is inputted into a search window, related classes are searched for and are then displayed in a list.

The list of searched classes is displayed together with the regions of the classes, grades, Classting subjects or the like. The user can apply for Classting by selecting a desirable class. When a teacher of the corresponding class approves the application of Classting, the two parties are joined with each other via Classting. When the classes are joined via Classting, all of the members of the classes can write a comment and a reply in the counterpart classes.

When the classes are joined via Classting, students of the classes can write a comment and a reply in the counterpart classes as well as share services, such as a cooperative learning project and a survey chat.

The Classting service of the present invention is a powerful tool capable of combining worldwide education. The Classting service can increase communication between classes and help the user establish a global social network, thereby supporting cooperative learning. This service encourages students who are rather passive or lack opportunities to establish a global social network.

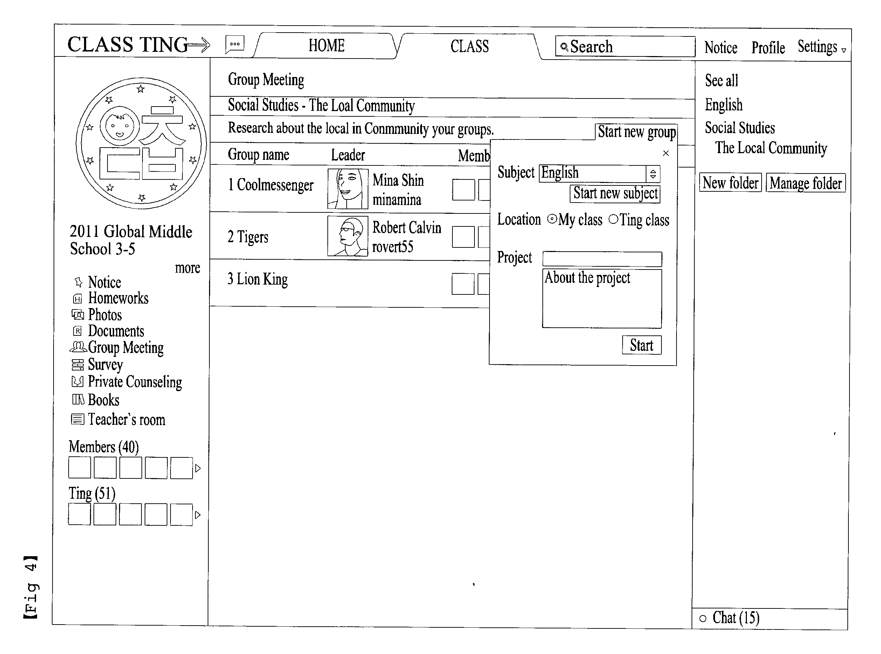

FIG. 4 is a cooperative learning screen. When a teacher clicks a group meeting item in this screen, a tool with which a cooperative project is to be set is provided, as shown in the top of the right frame.

When a new folder item is clicked, a pop-up window is created. In the pop-up window, it is possible to set a lesson to which the cooperative project belongs, targets who are expected to participate in the cooperative project, the subject of the cooperative project, and the guidance of the subject of the cooperative project.

A list of established meeting groups is displayed when the group meeting item in the class page is clicked. When a lesson folder in the right frame is clicked, meeting groups belong to that lesson are displayed.

A student who participates in the corresponding project can open a group meeting as a host or simply join the group meeting as a member. The host of each group has authority to approve the application of a member.

When members of the group access the group meeting, a group chat window is automatically created so that the members can have a discussion chat. A cooperative document tool is provided so that the members can share information/data and cooperatively edit a document.

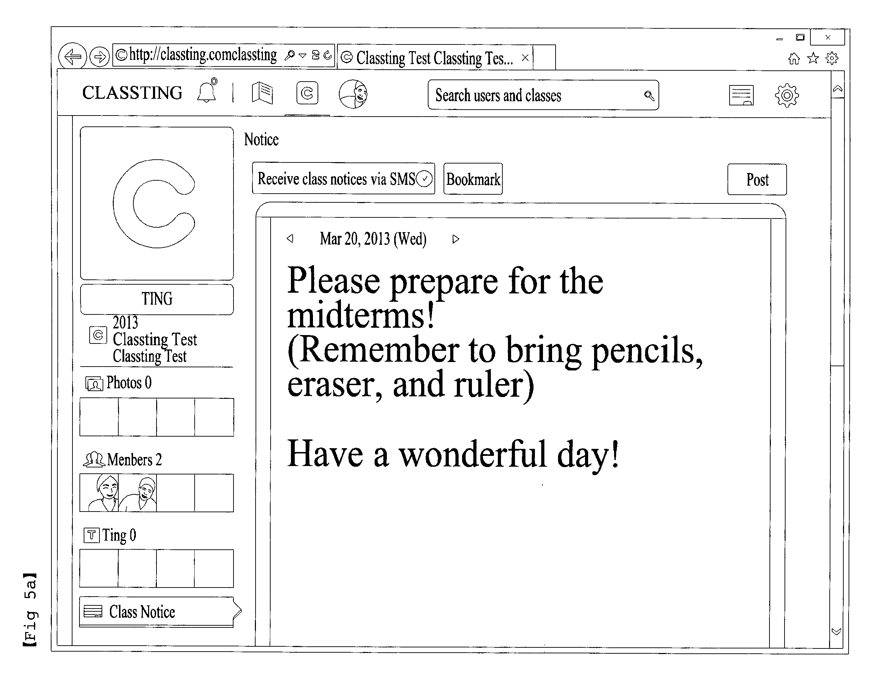

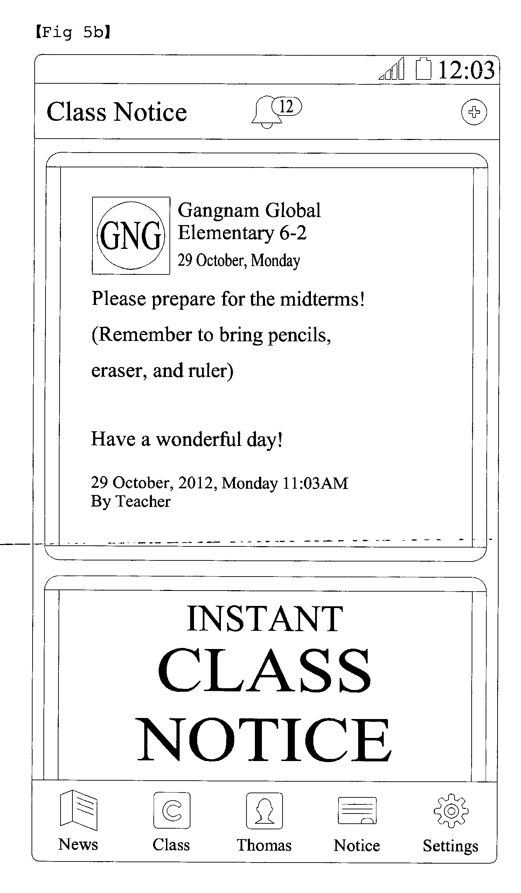

FIG. 5A shows an announcement page of the service according to the present invention. When a teacher makes up and stores a notice that he/she wants to send to students and parents, such as a class schedule, items to be prepared, or homework, students and parents can review the notice in the announcement page of this service.

In addition, when a post button positioned in the top of the central frame of the announcement screen is used, the notice is transmitted to the members of the class, such as students, teachers or parents, via smartphones, tablet PCs, e-books, smart TVs, e-mails or the like.

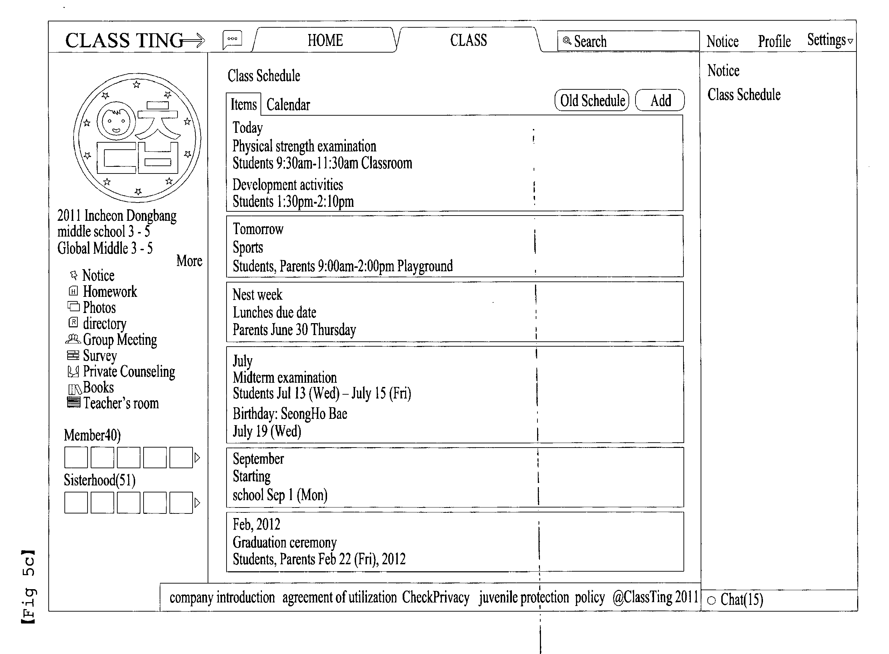

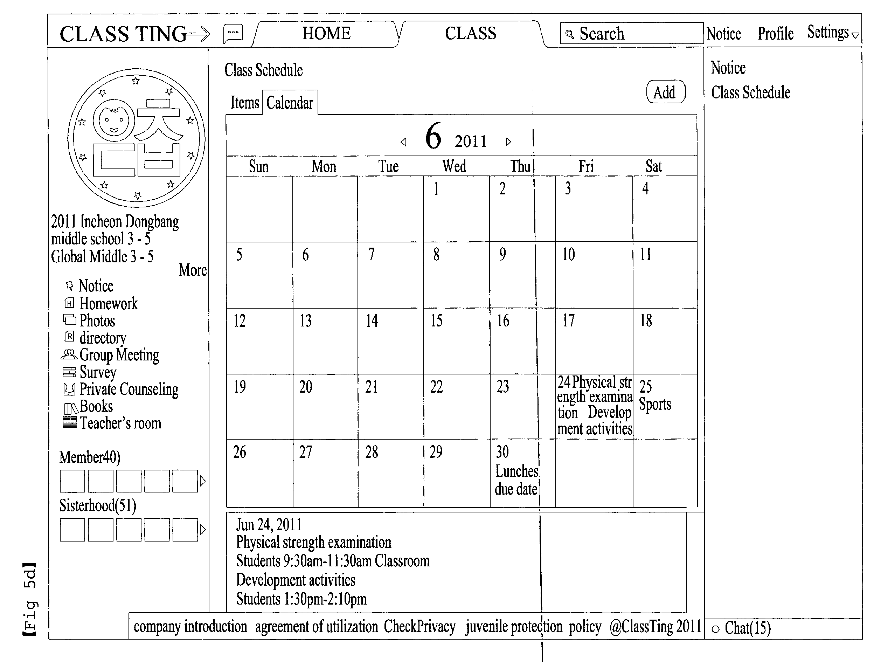

FIG. 5C and FIG. 5D show class schedule pages of the announcement service, which are displayed when the class schedule in the top of the right frame is clicked.

The class schedule is provided in the shape of a list, as shown in FIG. 5C, or the shape of a calendar, as shown in FIG. 5D. A schedule can be registered using an add button in the right top of the central frame. The registered schedule is automatically announced to the members of the class one day earlier via smartphones, tablet PCs, e-books, smart TVs, e-mails or the like.

The announcement service of the present invention not only is very available to students, but also helps parents conveniently manage school activities of students.

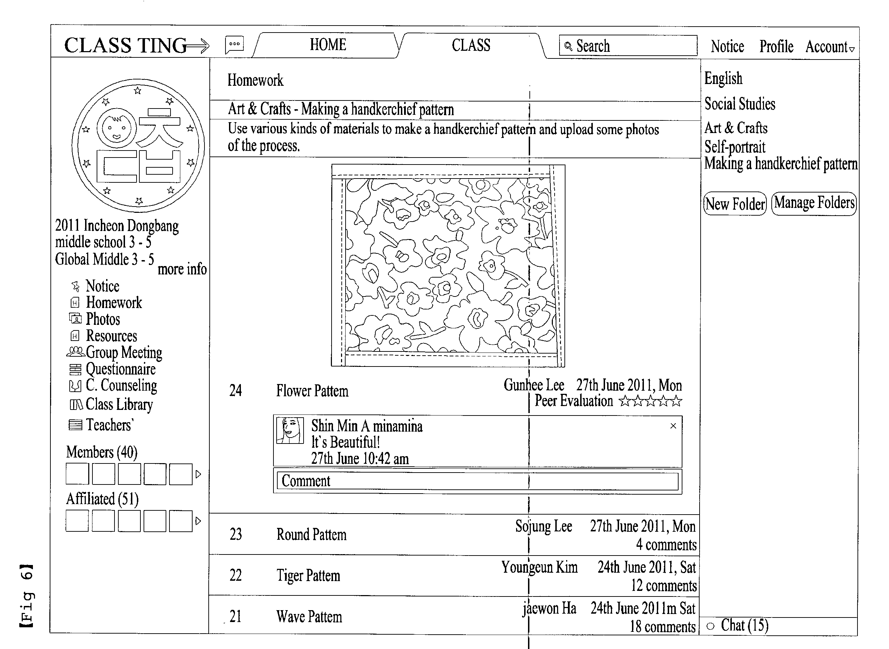

A homework room service, as shown in FIG. 6, provides a pop-up window when a new folder in the right top is pressed. A teacher can set contents, such as a lesson to which homework pertains, the subject of the homework, an evaluation method and standard, and the guidance of the homework, and input the contents into the pop-up window.

In the homework room page, a management tool including a new folder and folder management, with which the homework is to be set, is provided exclusively to teachers.

The evaluation method includes peer assessment (assessment by students) and/or teacher assessment, which can be selected on the pop-up window with which the homework is to be set.

When a student uploads a report file in a homework room, which has the shape of a bulletin board opened in the class page, according to the set homework, the report file is displayed in a list, and an average grade is recorded by peer and/or teacher assessment. Parents cannot evaluate the report but can only review it.

In the case of peer assessment, it is impossible to correct or delete the report if evaluation is made only once. When the teacher closes the assessment, the members can neither evaluate the report nor correct the evaluation any further.

In the case of peer assessment, the evaluated report can be reviewed by all of the members of the class. In the case of teacher assessment, only a corresponding student, parents and the teacher can review the report.

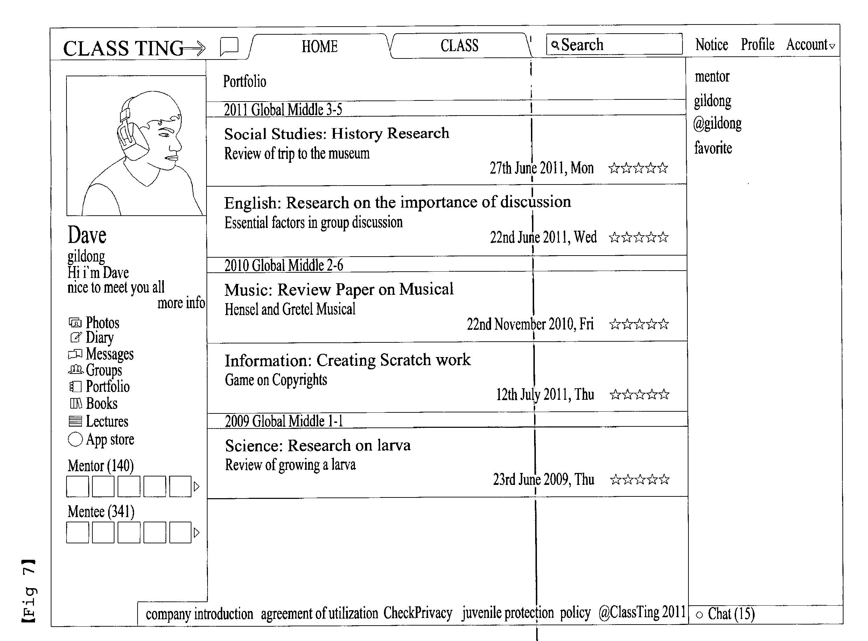

When the teacher closes the evaluation, averages of the evaluation of the reports can be viewed at a glance in the teacher's room. The reports submitted to the homework room of the class and the results of the evaluation of the reports are interlocked with the portfolio service of users such that they can be reviewed depending on the period in the portfolio on individual pages of users shown in FIG. 7.

The homework room service of the present invention shown in FIG. 6 is a service that can remarkably improve existing performance assessment. The homework reports which have been submitted in paper are uploaded in the form of a text file, a photo file or the like to the bulletin board. This consequently improves the ease of maintenance. In addition, the evaluation method is diversified into peer assessment and/or teacher assessment, so that the objectivity of evaluation can be maintained.

Since the teacher can review the results of evaluation of the submitted reports at a glance in the teacher's room, the teacher can efficiently manage a massive amount of performance assessment. In addition, the desire of students for learning can be inspired as they participate in the process of evaluation.

A portfolio service shown in FIG. 7 provides a user with the records of learning activities by editing the records. A list of the records is displayed in a portfolio page, interlocked with the reports submitted in the homework room of the class to which the user belongs.

In the portfolio page, the user can review, correct or download the submitted reports, and can maintain and manage lifelong learning activities using the portfolio service.

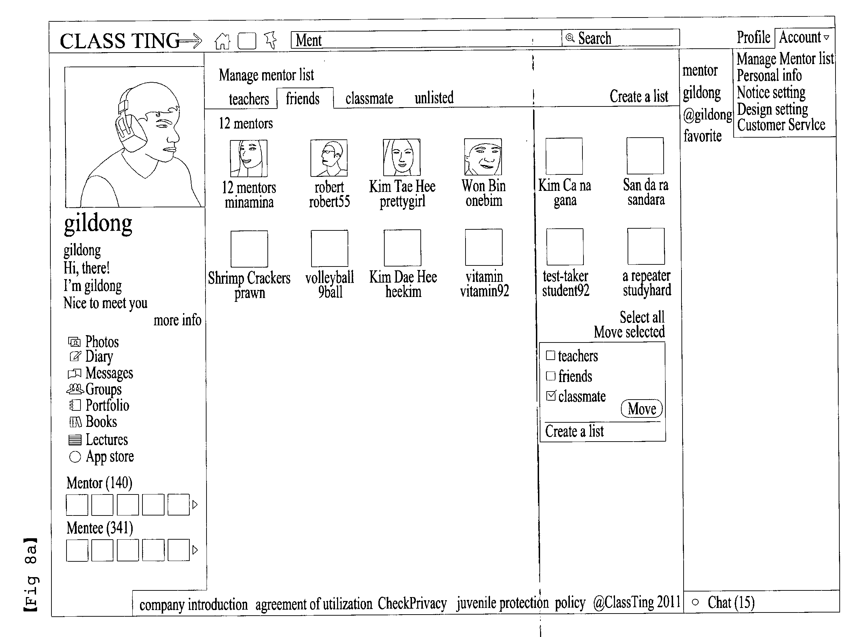

FIG. 8A is a mentoring service screen, which is provided on the main page of an individual page of a user. The mentoring service supports individual communication to users, and helps a user find people who the user wants to communicate with in order to construct a person-to-person social network, which is referred to as a mentor/mentee relationship.

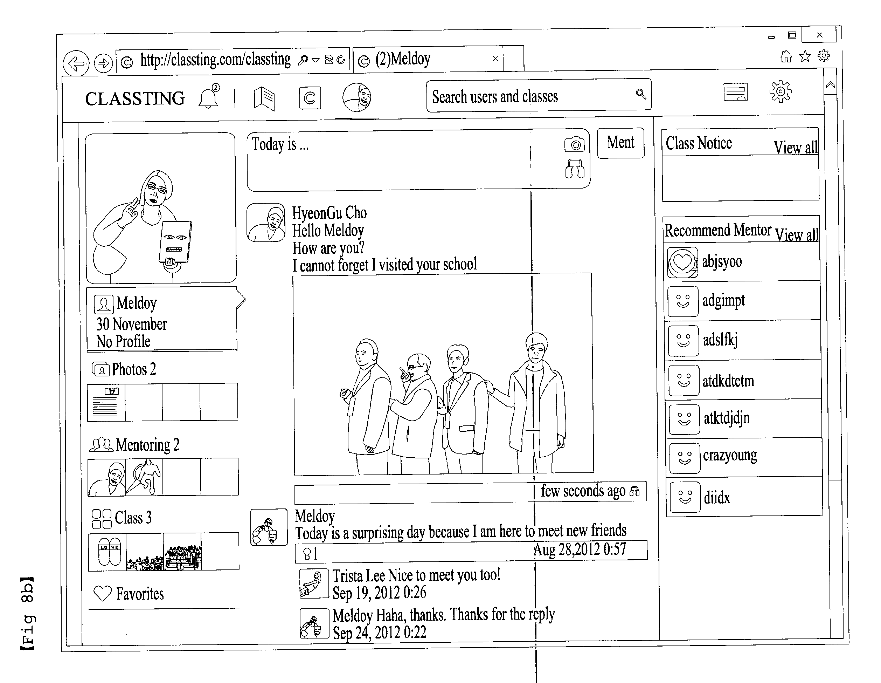

The mentoring service is a type of SNS, which helps a user construct the mentor/mentee relationship by finding people who the user wants to communicate with. The mentoring service also provides a management tool, as shown in FIG. 8B, with which the user can manage the people in a list. As shown in FIG. 8A, a comment written by the user and a comment written by the counterpart are updated and displayed in real time on both of the main pages of the individual pages of the user and the counterpart.

Due to the mentoring service, the user can ask a person who the user wants to communicate with to serve as a mentor or be asked to serve as a mentor. When the mentor/mentee relationship is set, as shown in FIG. 8B, a mentor/mentee is remarked by a thumb nail on the bottom of the left frame of the main frame of the individual page, and the management tool is provided.

The survey service provides a survey setting tool and an automatic analysis service so that any members of the class can easily conduct a survey. This can substitute the traditional paper survey, thereby lessening the load of teachers who have difficulties in distributing and collecting survey sheets and obtaining the statistics of the survey.

The survey service includes a survey setting step of providing a survey setting menu that pops up so that a member of a class can make up a survey, a target setting step of setting targets of the survey, a survey conducting step of receiving answers to questions of the survey from the targets of the survey, and a survey reviewing step in which a survey writer and the targets review results obtained from an analysis for each question and an analysis for the entire survey.

When it is intended to additionally carry out the same survey in another class which is joined via Classting with the class which was set as the targets of the survey at the time that the survey was made up, the survey reviewing step further includes an additional survey conducting step of carrying out an additional survey using a "Send to another class" function.

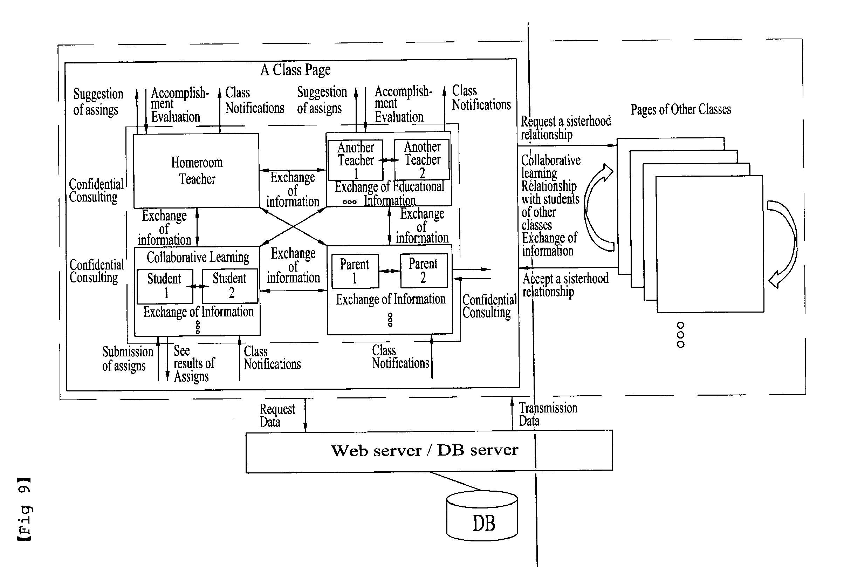

FIG. 9 is a view showing the basic concept of an SNS-combined learning community service, in which an SNS and an LMS tool are combined with each other. The learning community service is provided to a community based on a class (group). FIG. 9 depicts the schematic concept of how students, parents and teachers use the corresponding service.

According to the invention, the teacher's room is a service provided exclusively to teachers, and provides three major functions. The first function is a student/parent management function with which a list is created based on a number that a student inputted at registration and the name of the student that a parent inputted, and a teacher can review and manage it.

The second function is to provide a management tool, such as a variety of setting tools, with which all of functions provided from the class page can be managed, so that the performance assessment of students, for example, about homework and cooperative learning can be efficiently reviewed and managed. In the teacher's room, it is possible to review the results of evaluation on the reports that the students submitted as well as the accumulated results of evaluation for each student. The results are displayed in one page such that they can be reviewed at a glance.

The third function is a community function for communication between teachers. The community function is basically divided into categories depending on the lesson or grade and a community support tool is provided such that teachers can make up, operate or join separate groups in the community in order to share a variety of educational materials or various pieces of information.

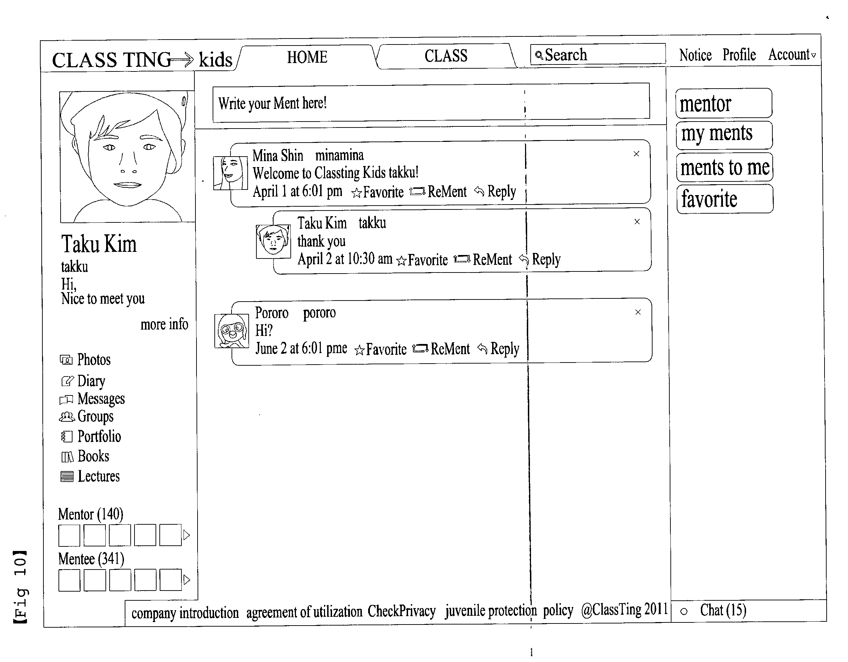

FIG. 10 is a view showing a customized interface dedicated to young kids according to an embodiment of the invention. FIG. 10 proposes a kid-friendly interface which uses characters set to the cognitive development stage of the young kids in order to help young kids access the service. The kid customized interface is characterized by characters, a large letter size and so on, and provides kid dedicated materials, such as Internet lectures, e-books, or other kid customized information.

The foregoing descriptions of specific exemplary embodiments of the present invention have been presented for the purposes of illustration and description. They are not intended to be exhaustive or to limit the present invention to the precise forms disclosed, and obviously many modifications and variations are possible in light of the above teachings. The exemplary embodiments were chosen and described in order to explain certain principles of the present invention and their practical application, to thereby enable others skilled in the art to make and utilize various exemplary embodiments of the present invention, as well as various alternatives and modifications thereof. It is intended that the scope of the present invention be defined by the Claims appended hereto and their equivalents.

## Claims

1. A method of sharing knowledge and information in a learning community, the sharing method being realized using a network which serves as a passage, through which voices and data are transmitted and received, and is implemented as a wired network and a wireless network, and a web server, a teacher terminal, a student terminal and a parent terminal which are connected to the network, the sharing method comprising: by the web server,
registering a student in Classting by receiving registration information from the student;
creating a home for the student whose registration information is inputted into a cyberspace of the web server;
automatically searching for a class that corresponds to information on a school and a year of birth that are inputted when registering the student, assigning the student to the corresponding class if the class is present, and creating the corresponding class if the class is not present;
recommending another student as a friend based on the registration information that is inputted when registering the student, and allowing the student to invite another student as a friend;
registering knowledge or information in the class so that viewing of knowledge is set to be either free or paid, open only to friends, or open to a person who is not a class member;
if the registered knowledge is set to be free, allowing another student to share and view the registered knowledge when another student accesses the registered knowledge, and if the registered knowledge is set to be paid, preceding online payment when another student attempts to access the knowledge set to be paid, and providing the registered knowledge when the payment is completed so that the knowledge is viewed;
searching for another class based on a subject or a keyword; and
recommending a class, of which an age and/or a keyword are similar to those of the student.

2. The sharing method according to claim 1, wherein recommending the class comprises:
recognizing the information on the year of birth which is inputted during the registration;
setting a class age to a year of birth to which a greatest number of members in a class has;
generating recommendation information for recommending another class having the same age;
receiving and setting a subject and a search keyword of the corresponding class; and
generating recommendation information for recommending another class, of which a subject and/or a search keyword are similar to the subject and search keyword that are set.

3. The sharing method according to claim 1, further comprising providing a user interface comprising:
an individual page which recommends the friend and the class from the registration information, and provides a social networking service formed of individual communication, and
a class page which provides a learning management system having a learning management service.

4. The sharing method according to claim 3, wherein the class page provides a Classting service comprising:
- searching for a class that a user wants to communicate using a Classting menu provided in the class menu;
- applying for Classting by selecting the class that the user wants from searched results; and
- notifying a teacher in charge of the selected class that the selected class is applied for Classting, and obtaining approval from the teacher in charge,
wherein, after the application for Classting is approved, members of the classes which communicate with each other via Classting can review comments exchanged between the members of the classes and activity update records, the members including students, parents and teachers, and
wherein the class page further comprises a service in which the learning management service and the social networking service are combined by sharing cooperative learning, a survey, a discussion chat and a photo album from among tools provided by the class page.

5. The sharing method according to claim 4, wherein the class page further provides a survey service comprising:
- setting targets of the survey, and providing a survey setting menu that pops up so that a class member can make up the survey;
- receiving answers to questions of the survey from the targets of the survey;
- reviewing, by a survey writer and the targets, results obtained from an analysis for the entire survey and an analysis for each question; and
- when it is wanted, at the process of reviewing the results, to carry out additional survey in the class which communicates via Classting with the class which was set as the targets of the survey when the survey was made up, carrying out an additional survey using a "Send to another class" function.
